# EUROPÄISCHE PATENTSCHRIFT

(11) **EP 3 749 556 B1**
(45) Veröffentlichungstag und Bekanntmachung des Hinweises auf die Patenterteilung: **07.12.2022**
(21) Anmeldenummer: 19701773.4
(22) Anmeldetag: 08.01.2019
(51) Int. Cl.: B60T 7/22, B60T 8/172

(54) **VERFAHREN ZUM BETRIEB EINES KRAFTFAHRZEUGS MIT EINER BREMSVORRICHTUNG**
METHOD FOR OPERATING A MOTOR VEHICLE HAVING A BRAKING DEVICE
PROCÉDÉ POUR FAIRE FONCTIONNER UN VÉHICULE AUTOMOBILE COMPORTANT UN DISPOSITIF DE FREINAGE

(30) Priorität: 06.02.2018 DE 102018201835
(43) Veröffentlichungstag der Anmeldung: 16.12.2020
(73) Patentinhaber: Audi AG, 85045 Ingolstadt (DE)
(72) Erfinder: SCHWINDL, Martin, 85375 Neufahrn bei Freising (DE)
(86) Internationale Anmeldenummer: PCT/EP2019/050333
(87) Internationale Veröffentlichungsnummer: WO 2019/154574

(56) Entgegenhaltungen:
- WO-A1-2004/085220
- DE-A1- 10 160 278
- DE-A1- 19 734 567
- DE-A1-102014 206 136

## Beschreibung

Die Erfindung betrifft ein Verfahren zum Betrieb eines Kraftfahrzeugs mit einer Bremsvorrichtung zum Bremsen des Kraftfahrzeugs. Daneben betrifft die Erfindung ein Kraftfahrzeug.

Es sind verschiedene Fahrerassistenz- und Notbremssysteme bekannt, die kritische Fahrsituationen eines Kraftfahrzeugs, beispielsweise das Vorhandensein eines Objekts oder einer Person auf einer Fahrbahn, frühzeitig erkennen können und einen Fahrer auf diese kritische Situation hinweisen bzw. selbsttätig Bremseingriffe durchführen können. Um Bremswege zu verkürzen ist es hierbei bekannt, dass bereits vor dem Bremseingriff ein Anforderungssignal an die Bremsanlage gesandt wird, um einen sogenannten Prefill der Bremsanlage anzufordern. Bei einem solchen Prefill wird mit Hilfe einer Pumpe ein geringer Druck im Hydrauliksystem der Bremsanlage aufgebaut, um die Bremsbeläge an die jeweilige Bremsscheibe anzulegen. Mit dieser Funktionalität wird eine Reduktion der Totzeit in der Bremsanlage für den Pumpenanlauf und die Überwindung des Luftspalts zwischen Bremsbelägen und Bremsscheiben erreicht.

Derartige Fahrerassistenz- und Notbremssysteme sind zum Beispiel aus WO 2004/085220 A1 und DE 197 34 567 A1 bekannt.

Nachteilig an dem erläuterten Vorgehen ist es, dass bei einem unnötigen oder zu frühen Anlegen der Bremsscheiben an die Bremsbeläge ein unnötiger Bremsverschleiß auftritt und bei einem zu späten oder nicht erfolgten Anlegen der Bremsbeläge an die Bremsscheiben keine optimale Effizienz der Bremsen erreicht wird, wodurch sich ein Bremsweg verlängert. Da zudem der erforderliche Druckaufbau je nach konkreter Ausgestaltung der Bremsanlage unterschiedlich lange dauern kann, ist es erforderlich, die Fahrerassistenz- bzw. Notbremssysteme in Abhängigkeit der im einzelnen Fahrzeug verbauten Bremsanlage zu konfigurieren. Selbst ein Austausch einzelner Komponenten der Bremsanlage, beispielsweise einer Pumpe zum Druckaufbau, wie sie beispielsweise für Fahrdynamikregelungen genutzt wird, eines elektronischen Bremskraftverstärkers oder eines integrierten Bremsmoduls, das beispielsweise einen Hauptzylinder und zusätzliche Komponenten umfassen kann, kann dazu führen, dass ohne Rekonfiguration der Fahrerassistenz- bzw. Notbremssysteme diese nicht mehr ihre optimale Performance erreichen oder dass ein unnötiger Verschleiß resultiert.

Der Erfindung liegt somit die Aufgabe zugrunde, ein demgegenüber verbessertes Verfahren zur Konditionierung von Bremsanlagen vor einem Bremseingriff in kritischen Fahrsituationen anzugeben.

Die Aufgabe wird erfindungsgemäß durch ein Verfahren zum Betrieb eines Kraftfahrzeugs mit einer Bremsvorrichtung zum Bremsen des Kraftfahrzeugs gelöst, das die folgenden Schritt umfasst:
- Prognose einer voraussichtlichen Zeitdauer bis zu einer durch ein Fahrerassistenzsystem oder durch einen Fahrer des Kraftfahrzeugs ausgelösten Geschwindigkeitsreduzierung oder Bremsung des Kraftfahrzeugs in Abhängigkeit von das Kraftfahrzeug betreffenden Fahrzeugdaten und/oder das Kraftfahrzeugumfeld betreffenden Umfelddaten, und
- Auslösen einer jeweiligen Funktion der Bremsvorrichtung, wenn eine der jeweiligen Funktion zugeordnete Auslösebedingung erfüllt ist, wobei eine jeweilige Auslösebedingungen erfüllt wird oder nur dann erfüllbar ist, wenn ein der jeweiligen Funktion zugeordneter Zeitgrenzwert durch die voraussichtliche Zeitdauer unterschritten wird, wobei wenigstens zwei der Funktionen voneinander unterschiedliche Zeitgrenzwerte zugeordnet sind.

Es wird somit vorgeschlagen, mehrere Funktionen einer Bremsvorrichtung in Abhängigkeit davon auszulösen, wie lange eine voraussichtliche Zeitdauer bis zu einer Auslösung einer Geschwindigkeitsreduzierung oder Bremsung durch ein Fahrerassistenzsystem oder durch einen Fahrer ist. Ein derartiges Vorgehen ermöglicht es, Funktionen, die zur Vorbereitung der Geschwindigkeitsreduzierung bzw. der Bremsung dienen können, automatisch zu richtigen Zeitpunkten und insbesondere zeitlich kaskadiert auszulösen. Die Prognose der voraussichtlichen Zeitdauer kann wiederholt, insbesondere periodisch, oder kontinuierlich durchgeführt werden. Bei einer Aktualisierung der voraussichtlichen Zeitdauer kann jeweils erneut für die einzelnen Funktionen überprüft werden, ob die jeweilige Auslösebedingung erfüllt ist, womit bei einer Verkürzung der voraussichtlichen Zeitdauer bis zur Geschwindigkeitsreduzierung bzw. Bremsung jeweils die aktuell vorteilhaften Funktionen ausgelöst werden können. Beispielsweise kann relativ lange vor der prognostizierten Geschwindigkeitsreduzierung bzw. Bremsung die Spannung eines Aktors, beispielsweise einer Hydraulikpumpe, des Bremssystems erhöht werden und erst relativ kurz vor der Bremsung bzw. Geschwindigkeitsreduzierung kann ein Prefill der Bremsanlage erfolgen. Wird nun beispielsweise zwischen der Auslösung dieser Funktionen erkannt, dass eine zunächst prognostizierte Geschwindigkeitsreduzierung bzw. Bremsung voraussichtlich doch nicht stattfinden wird, so kann sich hierdurch die voraussichtliche Zeitdauer bis zur nächsten Geschwindigkeitsreduzierung bzw. Bremsung erhöhen. Daher wird in dem genannten Beispiel dann beispielsweise kein Prefill erfolgen, wodurch ein zusätzlicher Verschleiß der Bremsanlage vermieden wird.

Wie später noch detailliert erläutert werden wird, kann das erfindungsgemäße Verfahren besonders vorteilhaft genutzt werden, wenn die Prognose der voraussichtlichen Zeitdauer und die Prüfung der Auslösebedingung durch separate Fahrzeugeinrichtungen des Kraftfahrzeugs erfolgt. Beispielsweise kann die Prognose der voraussichtlichen Zeitdauer durch eine Einrichtung erfolgen, die der Fahrerassistenz dient, und die Auslösebedingungen können durch eine Steuereinrichtung der Bremsvorrichtung geprüft werden. Hierdurch wird ermöglicht, dass im Rahmen der Prognose der voraussichtlichen Zeitdauer bis zur Geschwindigkeitsreduzierung bzw. Bremsung spezifische Eigenschaften der Bremsvorrichtung, die beeinflussen, wann welche Funktionen der Bremsvorrichtung zweckmäßigerweise durchgeführt werden, nicht berücksichtigt werden müssen. Zudem kann eine relativ einfache Schnittstelle zur Auslösung der Funktionen der Bremsvorrichtung vorgesehen werden. Es kann bereits ausreichen, die voraussichtliche Zeitdauer bis zur Geschwindigkeitsreduzierung bzw. Bremsung an die die Auslösebedingung auswertende Einrichtung bereitzustellen, um ein zweckmäßig kaskadiertes Auslösen der Funktionen der Bremsvorrichtung zu ermöglichen.

Die im erfindungsgemäßen Verfahren genutzten Funktionen der Bremsvorrichtung können insbesondere dazu dienen, eine Geschwindigkeitsreduzierung bzw. Bremsung vorzubereiten und können insbesondere zur Vorkonditionierung der Bremsvorrichtung für einen erwarteten Bremsvorgang dienen. Die Bremsvorrichtung kann mehrere Radbremsen umfassen, die bei einer Betätigung ein bremsendes Drehmoment auf das jeweilige Rad übertragen. Hierbei ist es möglich, dass die Radbremsen gemeinsam betätigt werden oder separat betätigbar sind. Die Betätigung kann insbesondere hydraulisch erfolgen.

Die Prognose einer voraussichtlichen Zeitdauer bis zu einer durch einen Fahrer ausgelösten Geschwindigkeitsreduzierung bzw. Bremsung kann insbesondere in Abhängigkeit von Fahrzeugdaten erfolgen, die Bedienhandlungen eines Fahrers betreffen. Beispielsweise können über entsprechende Sensoren Bedienhandlungen an einem Fahrpedal und/oder einem Bremspedal und/oder einer Kupplung und/oder einer Lenkung erfasst und ausgewertet werden. Beispielsweise kann eine schnelle Gasrücknahme ein Indiz dafür sein, dass der Fahrer voraussichtlich stark bremsen wird. Fahrerassistenzsysteme, beispielsweise Fahrerassistenzsysteme, die zur Kollisionsvermeidung oder zur abstandsabhängigen Geschwindigkeitsregelung dienen, können insbesondere in Abhängigkeit insbesondere sensorisch erfassten Umfelddaten eine voraussichtliche zukünftige Fahrsituation prädizieren und in Abhängigkeit hiervon eine voraussichtliche Zeitdauer bis zu einer vorteilhaft durchzuführenden Geschwindigkeitsreduzierung oder Bremsung prädizieren. Eine Prognose von zukünftigen Bremseingriffen durch Fahrerassistenzsysteme ist aus dem Stand der Technik bekannt und soll daher nicht detailliert erläutert werden. Eine Funktion zur Prognose der voraussichtlichen Zeitdauer bis zur Bremsung bzw. Geschwindigkeitsreduzierung kann manuell implementiert werden. Alternativ wäre es beispielsweise möglich, ein Verfahren des Maschinenlernens zu nutzen, um eine entsprechende Prognosefunktion zu trainieren.

Die Geschwindigkeit des Kraftfahrzeugs kann von einem Auslösen von zumindest einer der Funktionen der Bremsvorrichtung, vorzugsweise von einem Auslösen aller Funktionen der Bremsvorrichtung, die einer jeweiligen von der voraussichtlichen Zeitdauer abhängenden Auslösebedingung zugeordnet sind, unabhängig sein. Die Geschwindigkeit kann vollständig von dem Auslösen der Funktion bzw. der Funktionen unabhängig sein, es ist jedoch auch möglich, dass sie im Wesentlichen unabhängig hiervon ist. Beispielsweise führt ein Anlegen der Bremsbeläge an die Bremsscheiben zwar zu einer minimalen Geschwindigkeitsbeeinflussung. Diese ist im üblichen Fahrbetrieb jedoch kaum wahrnehmbar. Die Funktion bzw. die Funktionen der Bremsvorrichtung können derart gestaltet sein, dass das Kraftfahrzeug durch deren Auslösung mit weniger als 0,1 m/s² abgebremst wird.

Bei Auslösung wenigstens einer der Funktionen der Bremsvorrichtung kann ein für das Bremsen des Kraftfahrzeugs relevanter Aktor angesteuert und/oder eine Betriebsspannung dieses Aktors erhöht und/oder eine Abhängigkeit eines Bremsvorgangs von der Stellung und/oder der Stellungsveränderung eines Bremspedals verändert werden. Die Erhöhung einer Betriebsspannung eines Aktors, beispielsweise einer Hydraulikpumpe, der Bremsvorrichtung, kann die Leistungsfähigkeit des Aktors erhöhen und somit beispielsweise einen schnelleren Druckaufbau im Bremskreis ermöglichen. Eine Erhöhung einer Betriebsspannung kann beispielsweise durch eine Spannungsregelung im gesamten Bordnetz oder in einem Bordnetzabschnitt, der den Aktor umfasst, beispielsweise mit Hilfe eines DC/DC-Wandlers, erfolgen. Es ist jedoch auch möglich, dass andere Maßnahmen eingeleitet werden, die eine Bordnetzspannung bzw. eine Spannung an einem Aktor erhöhen können, beispielsweise das Starten eines Verbrennungsmotors, der einen Generator, beispielsweise eine Lichtmaschine, antreibt, oder eine Freilaufverhinderung eines solchen Generators.

Das Ansteuern eines Aktors kann unmittelbar einen Bremskreis beeinflussen, beispielsweise durch Betrieb einer Hydraulikpumpe einen Druck im Bremskreis erhöhen, oder die Ansteuerung kann derart erfolgen, dass eine Verzögerung verhindert wird. Beispielsweise kann der Motor einer Hydraulikpumpe gestartet werden, wobei die Hydraulikpumpe jedoch zunächst im Leerlauf betrieben wird.

Insbesondere in Fällen, in denen die Bremsung bzw. Geschwindigkeitsreduzierung durch den Fahrer erfolgt, kann es vorteilhaft sein, als Funktion zur Vorkonditionierung der Bremsvorrichtung eine Abhängigkeit eines Bremsvorgangs von der Stellung und/oder Stellungsveränderung eines Bremspedals zu verändern. Beispielsweise kann eine Bremspedalkennlinie angepasst werden, insbesondere indem ein verstellbarer, insbesondere elektronischer, Bremskraftverstärker entsprechend konfiguriert wird. Hierdurch kann beispielsweise eingestellt werden, welche Gegenkräfte bei einer Betätigung des Bremspedals wirken. Eine Berücksichtigung einer Stellungsveränderung eines Bremspedals erfolgt beispielsweise in Systemen zur hydraulischen Bremsunterstützung. Derartige Systeme dienen dazu, eine stärkere Bremsung durchzuführen, wenn erkannt wird, dass ein Fahrer eine starke Bremsung beabsichtigt, die Verstellung des Bremspedals jedoch hierfür zu langsam oder mit zu geringer maximaler Kraft durchführt. Die Absicht einer starken Bremsung kann beispielsweise erkannt werden, wenn bestimmte Grenzwerte für eine Stellung und/oder eine Geschwindigkeit der Stellungsveränderung des Bremspedals überschritten werden. In diesem Fall kann die Bremskraft bzw. ein Bremsdruck der Bremsvorrichtung automatisch schnell bis zu einem vorgegebenen Wert erhöht werden. Als eine der Funktionen der Bremsvorrichtung zur Vorkonditionierung der Bremsvorrichtung können beispielsweise Grenzwerte für die erforderliche Stellung des Bremspedals bzw. für die erforderliche Geschwindigkeit der Stellungsänderung angepasst werden, ab denen eine derartige assistierte Bremsung erfolgt.

Wenigstens eine der Funktionen kann bei ihrer Auslösung einen Druck in einem Bremskreis des Kraftfahrzeugs auf einen vorgegebenen Wert und/oder mit einem vorgegebenen zeitlichen Druckgradienten anheben. Ein Anheben des Drucks in einem Bremskreis des Kraftfahrzeugs auf einen vorgegebenen Wert kann insbesondere dazu dienen, die Bremsbeläge bereits an die Bremsscheiben anzulegen, ohne sie zum Bremsen des Kraftfahrzeugs auf diese zu pressen. Hierdurch kann die Totzeit der Bremsvorrichtung bei einer Bremsung reduziert werden, die ansonsten für einen Anlauf einer Hydraulikpumpe und zur Überwindung des Luftspalts zwischen Bremsbelag und Bremsscheibe erforderlich wäre.

Insbesondere in Fällen, in denen eine voraussichtliche zukünftige Geschwindigkeitsreduzierung bzw. Bremsung erst relativ spät erkannt wird, also die voraussichtliche Zeitdauer bis zu dieser Geschwindigkeitsreduzierung oder Bremsung sehr kurz ist, beispielsweise kürzer als 0,1 s, kann es vorteilhaft sein, statt einem Zielwert für den Druck in dem Bremskreis den zeitlichen Druckgradienten vorzugeben, also wie schnell ein Druckaufbau erfolgen soll. Der Gradient kann insbesondere derart vorgegeben werden, dass der Druck bis zum Zeitpunkt der voraussichtlichen Geschwindigkeitsreduzierung bzw. Bremsung stetig und streng monoton steigt, wobei vor dem Zeitpunkt der prädizierten Geschwindigkeitsreduzierung bzw. Bremsung keine Verzögerung erfolgt und ab dem Zeitpunkt der voraussichtlichen Geschwindigkeitsreduzierung bzw. Bremsung bzw. möglichst kurz nach diesem Zeitpunkt ein monoton steigender Verzögerungsaufbau erfolgt.

Wenigstens eine der Auslösebedingungen kann nur dann erfüllt werden oder erfüllbar sein, wenn ein der Funktion zugeordneter weiterer Zeitgrenzwert durch die voraussichtliche Zeitdauer überschritten wird. Einige Funktionen bzw. Konditionierungsmaßnahmen zur Vorbereitung einer Bremsung oder Geschwindigkeitsreduzierung sind nur dann zweckmäßig, wenn sie ausreichend früh vor einer prädizierten Bremsung bzw. Geschwindigkeitsreduzierung durchgeführt werden. Soll beispielsweise ein Verbrennungsmotor gestartet werden, um die Spannung in einem Bordnetz zu erhöhen und somit eine höhere Leistungsfähigkeit von wenigstens einem Aktor der Bremsvorrichtung zu erreichen, so kann der Start des Motors zunächst zu einer kurzen Reduzierung der Bordnetzspannung führen, bevor diese aufgrund des Motorbetriebs erhöht wird. Ein Zustarten des Motors sehr kurz vor einer prädizierten Bremsung oder Geschwindigkeitsreduzierung könnte somit unter Umständen sogar nachteilig für die Performance der Bremsvorrichtung sein.

Durch das oder ein weiteres Fahrerassistenzsystem oder durch Abfrage einer Benutzereingabe kann eine Haptikinformation ermittelt werden, die angibt, ob eine Nutzung von Funktionen der Bremsvorrichtung, die eine Haptik einer Bremspedalbetätigung beeinflussen können, erfolgen soll, wobei die Erfüllung wenigstens einer der Auslösebedingungen von der Haptikinformation abhängt. Die Haptik einer Bremspedalbetätigung kann beispielsweise beeinflusst werden, wenn eine Bremspedalkennlinie angepasst wird oder ein hydraulischer Bremsassistent anders konfiguriert wird, da in diesem Fall die Bremskraft so weit erhöht werden kann, dass eine Schlupfregelung früher ausgelöst werden kann, die in die Haptik am Bremspedal beeinflusst. Wird durch die Funktion ein Druck in einem Bremskreis des Kraftfahrzeugs erhöht, so kann dies ebenfalls zu einer Veränderung der Haptik der Bremspedalbetätigung führen, wenn ein direkt gekoppeltes Bremssystem genutzt wird. Je nach konkreter Fahrsituation bzw. nach Vorlieben des Nutzers kann gewünscht sein, eine solche Haptikbeeinflussung zu vermeiden, womit entsprechende Funktionen gesperrt oder nur unter bestimmten Zusatzbedingungen genutzt werden können. Es kann jedoch auch möglich sein, dass eine solche Haptikbeeinflussung gewünscht ist, weshalb in diesen Fällen entsprechende Funktionen beispielsweise früher oder unter weniger strengen Randbedingungen genutzt werden als Funktionen, die die Haptik der Bremspedalbetätigung nicht beeinflussen.

Im erfindungsgemäßen Verfahren kann durch mehrere Prädiktionsmodule eine jeweilige voraussichtliche Zeitdauer bis zu der Geschwindigkeitsreduzierung oder Bremsung prognostiziert werden, wobei bei der Auswertung der Auslösebedingung ausschließlich die niedrigste für eine momentane Fahrsituation prognostizierte voraussichtliche Zeitdauer berücksichtigt wird. Beispielsweise kann eines der Prädiktionsmodule Fahrerhandlungen auswerten und in Abhängigkeit dieser zukünftige Geschwindigkeitsreduzierungen bzw. Bremsungen prädizieren. Weitere Prädiktionsmodule können beispielsweise einzelnen Fahrerassistenzsystemen zugeordnet sein. Beispielsweise kann eine der voraussichtlichen Zeitdauern durch ein Fahrerassistenzsystem zur Abstandsregelung und eine der voraussichtlichen Zeitdauern durch ein Fahrerassistenzsystem zur Kollisionsvermeidung prädiziert werden. Durch das beschriebene Vorgehen kann die Vorkonditionierung der Bremsvorrichtung stets für die voraussichtlich nächste Bremsung bzw. Geschwindigkeitsreduzierung erfolgen.

Die Prognose der voraussichtlichen Zeitdauer bis zu der Geschwindigkeitsreduzierung oder der Bremsung kann durch eine erste Fahrzeugeinrichtung des Kraftfahrzeugs erfolgen, die insbesondere ein Fahrerassistenzsystem implementiert, und die Auswertung der Auslösebedingungen kann durch eine separat von der ersten Fahrzeugeinrichtung ausgebildete zweite Fahrzeugeinrichtung des Kraftfahrzeugs erfolgen, die insbesondere eine Steuereinrichtung der Bremsvorrichtung ist, wobei die voraussichtliche Zeitdauer bis zu der Geschwindigkeitsreduzierung oder der Bremsung über eine Kommunikationsschnittstelle von der ersten an die zweite Fahrzeugeinrichtung bereitgestellt wird. Die erste Fahrzeugeinrichtung kann hierbei das die voraussichtliche zukünftige Bremsung oder Geschwindigkeitsreduzierung auslösende Fahrerassistenzsysteme und/oder wenigstens ein weiteres Fahrerassistenzsystem implementieren.

Durch das beschriebene Vorgehen wird eine einfache Kommunikationsschnittstelle, die beispielsweise über einen Fahrzeugbus kommunizieren kann, geschaffen, über die bedarfsgerecht und kaskadiert jeweils vorteilhaften Funktionen der Bremsvorrichtung ausgelöst werden können. Die Kommunikationsschnittstelle kann somit unabhängig von den tatsächlich durch die Bremsvorrichtung implementierten Funktionen für die Vorkonditionierung der Bremsvorrichtung sein. Es können somit beispielsweise weitere Funktionen ergänzt oder nur Teile der Funktionen implementiert werden, ohne die Kommunikationsschnittstelle oder die Fahrerassistenzsysteme modifizieren zu müssen. Es kann somit erreicht werden, dass die Fahrerassistenzsysteme und die Funktionen zur Vorkonditionierung der Bremsvorrichtung im Wesentlichen unabhängig voneinander implementiert bzw. weiterentwickelt werden können. Das erfindungsgemäße Verfahren zur Verzögerungskonditionierung ist somit sowohl bezüglich der genutzten Fahrerassistenzsysteme bzw. Prädiktionsmodule als auch bezüglich der zur Verfügung gestellten Funktionen zur Vorkonditionierung der Bremsvorrichtung leicht erweiterbar bzw. modifizierbar.

Neben dem erfindungsgemäßen Verfahren betrifft die Erfindung ein Kraftfahrzeug, das eine Fahrzeugeinrichtung oder zwei separate, über eine Kommunikationsschnittstelle kommunizierende Fahrzeugeinrichtung umfasst, die oder die gemeinsam zur Durchführung des erfindungsgemäßen Verfahrens eingerichtet ist oder sind. Das erfindungsgemäße Kraftfahrzeug kann mit den zum erfindungsgemäßen Verfahren erläuterten Merkmalen weitergebildet werden und umgekehrt.

Werden zwei oder mehr separate Fahrzeugeinrichtungen genutzt, um das erfindungsgemäße Verfahren zu implementieren, so kann die erste dieser Fahrzeugeinrichtungen, die insbesondere wenigstens ein Fahrerassistenzsystem implementieren kann, zur Prognose der voraussichtlichen Zeitdauer bis zu der Geschwindigkeitsreduzierung oder Bremsung genutzt werden, während die zweite Fahrzeugeinrichtung, die insbesondere eine Steuereinrichtung der Bremsvorrichtung ist, zur Auswertung der Auslösebedingungen und zum Auslösen der Funktionen, für die diese erfüllt ist, dienen kann. Die Kommunikationsschnittstelle kann insbesondere in Form einer definierten Hardwareschnittstelle implementiert sein. Beispielsweise kann eine Kommunikation über einen Fahrzeugbus erfolgen. Zwischen der ersten und der zweiten Fahrzeugeinrichtung kann insbesondere ein die voraussichtliche Zeitdauer beschreibender Zeitwert übertragen werden, womit, wie obig erläutert, die beiden Fahrzeugeinrichtungen im Wesentlichen unabhängig voneinander weiterentwickelt bzw. konfiguriert werden können. Der Zeitwert kann beispielsweise mit einer festen Taktung oder jeweils bei Erfüllung einer Aktualisierungsbedingung übertragen werden.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel eines erfindungsgemäßen Kraftfahrzeugs, durch das ein Ausführungsbeispiel des erfindungsgemäßen Verfahrens durchführbar ist, und
- Fig. 2: ein Beispiel dafür, welche Funktionen in einer Bremsvorrichtung zu welchen Zeitpunkten vor einer prognostizierten Bremsung bzw. Geschwindigkeitsreduzierung durchgeführt werden können.

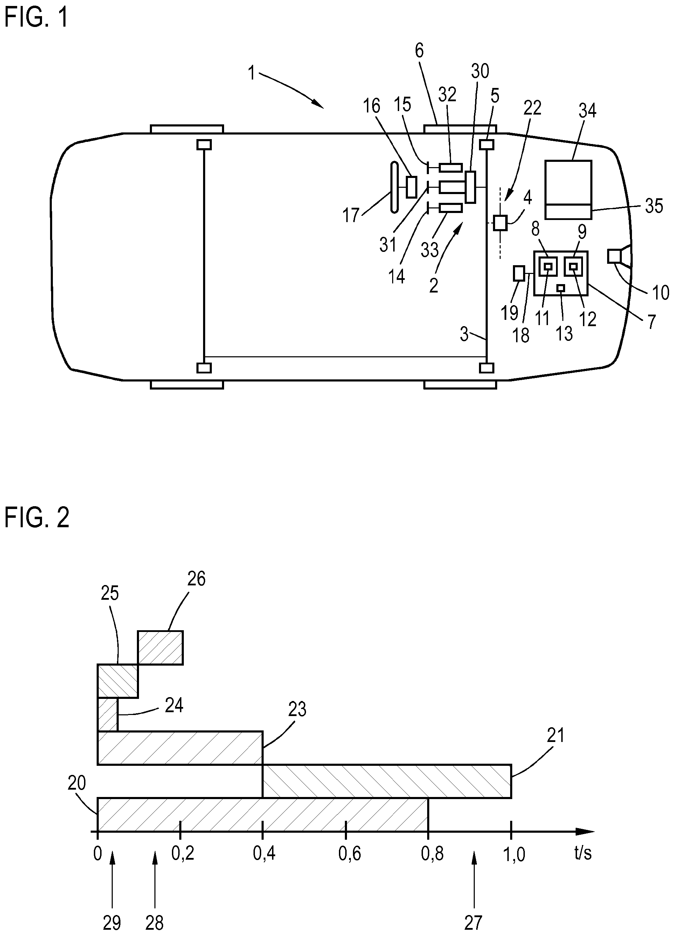

Fig. 1 zeigt ein Kraftfahrzeug 1, mit dem ein Verfahren zur Vorkonditionierung einer Bremsvorrichtung 2 durchgeführt werden kann, um diese frühzeitig vor einer prognostizierten Bremsung bzw. Geschwindigkeitsreduzierung, insbesondere in kritischen Fahrsituationen, vorzukonditionieren. Die Bremsvorrichtung ist in Fig. 1 aus Übersichtlichkeitsgründen vereinfacht dargestellt. Die Radbremsen für verschiedene Räder 6 umfassen jeweils einen Bremsbelag 5, der auf nicht gezeigte Bremsscheiben aufpressbar ist, um die Räder 6 zu bremsen. Das Aufpressen des Bremsbelags 5 auf die Bremsscheiben erfolgt hydraulisch über einen hydraulischen Bremskreis 3. Aus Übersichtlichkeitsgründen ist in Fig. 1 ein gemeinsamer Bremskreis 3 für alle vier Räder 6 dargestellt. In realen Fahrzeugen werden häufig zusätzliche Mittel genutzt, um einzelne der Räder 6 verschieden stark bremsen zu können bzw. zumindest eine Bremskraftverteilung zwischen Vorder- und Hinterachse vorgeben zu können.

Der Druck in dem Bremskreis 3 kann einerseits dadurch erhöht werden, dass ein Bremspedal 31 durch einen Fahrer betätigt wird. Das Bremspedal 31 ist über einen elektrischen und somit einstellbaren Bremskraftverstärker 30 mit dem Bremskreis 3 gekoppelt, so dass der Zusammenhang zwischen einer auf das Bremspedal 31 ausgeübten Kraft und der Druckänderung im Bremskreis 3 und somit die Bremspedalkennlinie einstellbar ist. Zusätzlich kann der Druck im Bremskreis 3 dadurch erhöht werden, dass ein Aktor 4, nämlich eine Hydraulikpumpe, aktiviert wird. Im dargestellten Kraftfahrzeug 1 ist aus Übersichtlichkeitsgründen nur ein solcher Aktor dargestellt. Häufig werden in realen Fahrzeugen jedoch mehrere dieser Aktoren, insbesondere ein Aktor pro Rad, genutzt, um Bremskräfte an einzelnen der Räder 6 gezielt erhöhen zu können, beispielsweise im Rahmen einer Stabilitätskontrolle.

In bestimmten, insbesondere kritischen, Fahrsituationen kann es vorteilhaft sein, die Bremsvorrichtung 2 vorzukonditionieren, wenn zukünftig eine Geschwindigkeitsreduzierung oder Bremsung erfolgen soll. Soll beispielsweise eine automatische Bremsung durch ein Fahrerassistenzsystem durchgeführt werden, muss hierbei zunächst der Aktor 4, also z. B. eine Hydraulikpumpe, anlaufen, wodurch sich das Einsetzen des Bremsvorgangs verzögern kann. Zudem sind die Bremsbeläge 5 von Bremsscheiben üblicherweise durch einen Luftspalt beabstandet, so dass dieser bei einer Bremsung zunächst überwunden werden muss. Insgesamt kann somit ein Bremsvorgang später als gewünscht erfolgen bzw. es kann unter Umständen nicht sofort die gewünschte Verzögerungsstärke erreicht werden. Dem soll situationsabhängig durch eine entsprechende Konditionierung der Bremsvorrichtung 2 entgegengewirkt werden.

Um eine solche Vorkonditionierung zu ermöglichen, wird im Kraftfahrzeug 1 zunächst eine Prognose einer voraussichtlichen Zeitdauer bis zu einer durch ein Fahrerassistenzsystem 8, 9 oder einen Fahrer ausgelösten Geschwindigkeitsreduzierung oder Bremsung prädiziert. Dies erfolgt im Kraftfahrzeug 1 durch eine erste Fahrzeugeinrichtung 7. Diese implementiert im Beispiel zwei Fahrerassistenzsysteme 8, 9. Das Fahrerassistenzsystem 8 ist ein Abstandsregeltempomat, der dazu dient, einen Abstand zu einem über einen Sensor 10 erfassten Vorfahrzeug konstant zu halten. Das Fahrerassistenzsystem 9 ist ein Kollisionsvermeidungs- bzw. Kollisionsfolgenverminderungssystem, das über den Sensor 10 Hindernisse im Umfeld des Kraftfahrzeugs 1 erkennt und eine Kollision mit diesen durch Brems- und/oder Lenkeingriffe verhindert bzw. deren Folgen mindert. Beide der Fahrerassistenzsysteme 8, 9 können erkennen, dass voraussichtlich zukünftig eine Geschwindigkeitsreduzierung bzw. Bremsung des Kraftfahrzeugs 1 erforderlich sein wird. Eine Zeitdauer bis zu einer voraussichtlich durch das jeweilige Fahrerassistenzsystem 8, 9 ausgelösten Geschwindigkeitsreduzierung bzw. Bremsung wird durch ein jeweiliges Prädiktionsmodul 11, 12 prädiziert.

Für eine Vorkonditionierung des Bremssystems kann es auch relevant sein, Bedienhandlungen eines Fahrers zu erkennen, die auf eine voraussichtliche zukünftige Geschwindigkeitsreduzierung bzw. Bremsung schließen lassen. Daher implementiert die erste Fahrzeugeinrichtung 7 zusätzlich ein weiteres Prädiktionsmodul 13, das eine voraussichtliche Zeitdauer bis zu einer durch den Fahrer des Kraftfahrzeugs ausgelösten Geschwindigkeitsreduzierung oder Bremsung prädiziert. Diese Prädiktion kann in Abhängigkeit von über einen Sensor 16 erfassten Lenkwinkeln und/oder Lenkmomenten an einem Lenkrad 17 und/oder von über die Sensoren 32, 33 erfassten Betätigungen des Fahrpedals 14 bzw. der Kupplung 15 ermittelt werden. Beispielsweise kann eine schnelle Gasrücknahme am Fahrpedal 14 als Indiz für eine zeitnahe Bremsung durch den Fahrer betrachtet werden. Ergänzend oder alternativ können auch Umfelddaten, die beispielsweise über den Sensor 10 erfasst werden können, ausgewertet werden, um Fahrerhandlungen zu prädizieren.

Ein Zeitwert, der die kleinste der durch die Prädiktionsmodule 11, 12, 13 prädizierten Zeitdauern beschreibt, wird über die Kommunikationsschnittstelle 18, die beispielsweise durch einen Fahrzeugbus implementiert werden kann, an eine zweite Fahrzeugeinrichtung 19 übermittelt, die insbesondere eine Steuereinrichtung der Bremsvorrichtung 2 ist. In Abhängigkeit dieser übermittelten Zeitdauer können durch die zweite Fahrzeugeinrichtung 19 verschiedene Funktionen der Bremsvorrichtung 2, die zur Vorkonditionierung der Bremsvorrichtungen 2 vor einer Bremsung bzw. Geschwindigkeitsreduzierung dienen, aktiviert werden.

Ein Beispiel für verschiedene nutzbare Funktionen der Bremsvorrichtung 2 und Zeitgrenzen für deren Auslösung werden im Folgenden mit Bezug auf Fig. 2 erläutert. Fig. 2 zeigt einen Zeitstrahl, der die Zeitdauer bis zu einer prognostizierten Geschwindigkeitsreduzierung bzw. Bremsung angibt. Hierbei können zu verschiedenen Zeiten vor der Geschwindigkeitsreduzierung bzw. Bremsung verschiedene der Funktionen 20, 21, 23 - 26 ausgelöst werden. Um dies zu erreichen, ist jeder der Funktionen 20, 21, 23 - 26 eine Auslösebedingung zugeordnet, für deren Erfüllung es notwendig ist, dass die voraussichtliche Zeitdauer bis zur Geschwindigkeitsreduzierung bzw. Bremsung, die über die Kommunikationsschnittstelle 18 übertragen wurde, innerhalb des in Fig. 2 dargestellten Zeitintervalls für die entsprechende Funktion 20, 21, 23 - 26 liegt. Die den Funktionen 20, 21, 23 - 26 zugeordneten Auslösebedingungen sind somit nur dann erfüllt bzw. erfüllbar, wenn ein der jeweiligen Funktion 20, 21, 23 - 26 zugeordneter Zeitgrenzwert durch die voraussichtliche Dauer unterschritten wird. Die Auslösebedingungen für die Funktionen 21 und 26 sind zudem nur dann erfüllt bzw. erfüllbar, wenn ein unterer Zeitgrenzwert von im Beispiel 0,4 bzw. 0,1 Sekunden durch die voraussichtliche Zeitdauer bis zur Geschwindigkeitsreduzierung oder Bremsung überschritten wird. Wie später noch genauer erläutert werden wird, können die Auslösebedingungen der Funktionen 20, 21, 23 - 26 zudem von weiteren Faktoren abhängen.

Die voraussichtliche Zeitdauer bis zur Geschwindigkeitsreduzierung bzw. Bremsung wird im Kraftfahrzeug 1 periodisch ermittelt. Wird somit eine zukünftige Geschwindigkeitsreduzierung oder Bremsung frühzeitig erkannt, beispielsweise zum Zeitpunkt 27, so werden in vorgegebener zeitlicher Abfolge die Funktionen 20, 21, 23 - 26 aktiviert, um die Bremsvorrichtung für die bevorstehende Geschwindigkeitsreduzierung bzw. Bremsung vorzukonditionieren. Wird zwischen diesem ersten Erkennen und dem prädizierten Zeitpunkt erkannt, dass eine Bremsung bzw. Geschwindigkeitsreduzierung doch nicht oder erst später erfolgen soll, so wird somit auch eine längere voraussichtliche Zeitdauer bis zur Geschwindigkeitsreduzierung bzw. Bremsung prognostiziert, womit die Ausführungskaskade der Funktionen 20, 21, 23 - 26 abgebrochen oder verzögert wird.

Erfolgt erst sehr kurzfristig eine Prognose einer zukünftig voraussichtlich erforderlichen Geschwindigkeitsreduzierung oder Bremsung, beispielsweise bei plötzlich auftauchenden Hindernissen oder unvorhergesehenen Fahrerhandlungen, werden nicht mehr notwendig alle der Funktionen 20, 21, 23 - 26 aktiviert. Beispielsweise würden bei einer Erkennung erst ungefähr 0,15 Sekunden vor der prognostizierten Geschwindigkeitsreduzierung bzw. Bremsung, also zum Zeitpunkt 28, zunächst nur die Funktionen 20, 23 und 26 aktiviert und zu späteren Zeiten kaskadiert die Funktionen 25 und 24. Bei sehr kurzfristiger Erkennung, also bei sehr kurzer voraussichtlicher Zeitdauer bis zur Geschwindigkeitsreduzierung oder Bremsung, beispielsweise zum Zeitpunkt 29, werden unmittelbar die Funktionen 20, 23, 24 und 25 aktiviert und im weiteren Verlauf keine zusätzlichen Funktionen aktiviert.

Durch die Vorgabe von oberen und optional unteren Zeitgrenzwerten für die einzelnen Funktionen 20, 21, 23 - 26 im Rahmen der Auslösebedingung kann somit erreicht werden, dass bei einem frühzeitigen Erkennen einer zukünftigen wahrscheinlichen Geschwindigkeitsreduzierung oder Bremsung die Vorkonditionierungsfunktionen 20, 21, 23 - 26 in einer zweckmäßigen Reihenfolge und zeitlichen Abfolge aktiviert werden können und dass auch in Fällen, in denen voraussichtliche Geschwindigkeitsreduzierungen oder Bremseingriffe erst spät erkannt werden, eine zweckmäßige Untergruppe der zu aktivierenden Funktionen ausgewählt wird.

Als Funktionen 20, 21, 23 - 26 können alle Funktionen genutzt werden, die eine zukünftige Geschwindigkeitsreduzierung bzw. einen zukünftigen Bremseingriff vorbereitend unterstützen können. Die Funktion 20 kann eine Auslöseschwelle für einen hydraulischen Bremsassistenten anpassen. Ein hydraulischer Bremsassistent kann den Druck im Bremskreis 3 rasch, insbesondere bis zum Eingreifen einer Schlupfregelung, erhöhen, wenn anhand des Betätigungsmusters des Bremspedals 31 erkannt wird, dass vom Fahrer voraussichtlich eine Notbremsung gewünscht ist. Hierbei werden typischerweise Grenzwerte für eine Betätigungskraft und einen Gradienten der Betätigungskraft des Bremspedals 31 vorgegeben, die bei Aktivierung der Funktion 20 abgesenkt werden können, um ein leichteres Auslösen einer Notbremsung zu ermöglichen.

Die Funktion 21 führt eine Spannungsanhebung im Bordnetzabschnitt 22 durch, der den Aktor 4 bestromt. Hierdurch kann die Leistungsfähigkeit des Aktors 4 erhöht werden, womit ein rascherer Druckaufbau im Bremskreis 3 erreicht werden kann. Prinzipiell wäre es möglich, die Betriebsspannung beispielsweise durch eine entsprechende Steuerung von DC/DC-Wandlern zu erhöhen. Im Kraftfahrzeug 1 soll die Steigerung der Betriebsspannung jedoch dadurch erreicht werden, dass ein Antriebsmotor 34 des Kraftfahrzeugs 1 gestartet wird, um über den Generator 35 die Bordnetzspannung zu erhöhen. Da ein Starten des Motors die Bordnetzspannung zunächst reduzieren kann, wird die Funktion 21 nur dann aktiviert, wenn bis zum voraussichtlichen Brems- bzw. Geschwindigkeitsreduzierungszeitpunkt noch wenigstens 0,4 Sekunden verbleiben.

Die Funktion 23 steuert den Aktor 4 an, um einen Antriebsmotor der Hydraulikpumpe anlaufen zu lassen. Hierbei wird der Motor zunächst im Leerlauf betrieben, das heißt, es erfolgt zunächst keine Druckänderung im Bremskreis 3. Durch das frühzeitige Bestromen des Aktors 4 kann jedoch eine Verzögerung, die durch ein Anlaufen eines Motors der Pumpe entstehen würde, vermieden werden.

Durch die Funktion 24 wird eine Kennlinie für das Bremspedal 31 angepasst. Dies wird dadurch erreicht, dass der elektronische Bremskraftverstärker 30 verstellt wird, so dass die Übertragungsfunktion von einer auf das Bremspedal eingebrachten Kraft zu einer Druckänderung in dem Bremskreis 3 geändert wird. Beispielsweise kann die Kennlinie derart verändert werden, dass bereits bei einer geringeren Kraft ein maximaler Druck im Bremskreis 3 eingestellt wird, um eine Notbremsung auszulösen. Eine entsprechende Umkonfiguration des Bremskraftverstärkers 30 ist sehr schnell möglich. Um ein ungewolltes Bremsverhalten im Normalbetrieb zu vermeiden, wird die durch die Funktion 24 bereitgestellte Anpassung der Abhängigkeit des Bremsvorgangs von der Stellung des Bremspedals 31 erst sehr kurz vor dem prognostizierten Zeitpunkt für die Bremsung bzw. Geschwindigkeitsreduzierung durchgeführt. Anders ausgedrückt wird ein kleiner Grenzwert, beispielsweise 0,05 Sekunden, vorgegeben und die Funktion 24 wird nur dann ausgelöst, wenn dieser Grenzwert unterschritten wird.

Die Funktionen 25 und 26 führen beide zu einer Erhöhung des Drucks in dem Bremskreis 3 durch einen Betrieb des Aktors 4. Die zeitlich früher aktivierte Funktion 26 löst eine Erhöhung des Drucks auf einen definierten Wert aus, bei dem insbesondere die Bremsbeläge 5 bereits an den Bremsscheiben anliegen. Da die Bremsbeläge 5 jedoch mit geringem Druck aufliegen, resultiert im Wesentlichen kein Einfluss auf die Geschwindigkeit des Kraftfahrzeugs 1. Da dieses Anlegen der Bremsbeläge 5 an die Bremsscheiben zu einer zusätzlichen Abnutzung führen kann, wird die Funktion 26 erst relativ kurz, beispielsweise 0,2 Sekunden, vor dem prognostizierten Brems- bzw. Geschwindigkeitsreduzierungszeitpunkt ausgelöst.

Die Funktion 25 erhöht ebenfalls den Druck im Bremskreis 3, falls noch kein ausreichender Druck vorliegt, wobei hierbei eine gradientenbasierte Steuerung erfolgt. Der Gradient des Drucks wird hierbei so gewählt, dass der Druck im Bremskreis 3 streng monoton steigt, wobei zum prognostizierten Brems- bzw. Geschwindigkeitsreduzierungszeitpunkt im Wesentlichen noch keine Verzögerung erfolgt, diese sich jedoch ab diesem Zeitpunkt streng monoton steigert. Eine solche gradientenbasierte Drucksteigerung kann vorteilhaft sein, wenn eine Drucksteigerung sehr kurzfristig vor dem Brems- bzw. Geschwindigkeitsreduzierungszeitpunkt erfolgen soll.

Wie bereits erläutert kann die Aktivierung der Funktionen 20, 21, 23 - 26 von zusätzlichen Faktoren abhängen. Je nach Fahrsituation oder Vorgabe eines Fahrers kann es gewünscht sein, dass Funktionen, die die Haptik einer Betätigung des Bremspedals 31 verändern, bevorzugt oder bevorzugt nicht genutzt werden. Die Haptik am Bremspedal 31 wird insbesondere durch die Verstellung des hydraulischen Bremsassistenten durch die Funktion 20 und der Pedalkennlinie durch die Funktion 24 beeinflusst. In direkt gekoppelten Bremssystemen hängt die Haptik zudem vom Druck im Bremskreis 3 ab, womit sie auch durch die Funktionen 25 und 26 beeinflusst wird. Ist eine Beeinflussung der Haptik nicht gewünscht, können diese Funktionen nicht genutzt werden oder sie können beispielsweise erst bei Erfüllung einer Zusatzbedingung, beispielsweise bei Erkennung einer besonders kritischen Fahrsituation, genutzt werden.

## Patentansprüche

1. Verfahren zum Betrieb eines Kraftfahrzeugs (1) mit einer Bremsvorrichtung (2) zum Bremsen des Kraftfahrzeugs (1), umfassend die Schritte:
- Prognose einer voraussichtlichen Zeitdauer bis zu einer durch ein Fahrerassistenzsystem (8, 9) oder durch einen Fahrer des Kraftfahrzeugs (1) ausgelösten Geschwindigkeitsreduzierung oder Bremsung des Kraftfahrzeugs (1) in Abhängigkeit von das Kraftfahrzeug (1) betreffenden Fahrzeugdaten und/oder das Kraftfahrzeugumfeld betreffenden Umfelddaten, und
- Auslösen einer jeweiligen Funktion (20, 21, 23 - 26) der Bremsvorrichtung (2), wenn eine der jeweiligen Funktion (20, 21, 23 - 26) zugeordnete Auslösebedingung erfüllt ist, wobei eine jeweilige Auslösebedingungen erfüllt wird oder nur dann erfüllbar ist, wenn ein der jeweiligen Funktion (20, 21, 23 - 26) zugeordneter Zeitgrenzwert durch die voraussichtliche Zeitdauer unterschritten wird, wobei wenigstens zwei der Funktionen (20, 21, 23 - 26) voneinander unterschiedliche Zeitgrenzwerte zugeordnet sind.

2. Verfahren nach Anspruch 1,
**dadurch gekennzeichnet,**
**dass** die Geschwindigkeit des Kraftfahrzeugs (1) von einem Auslösen zumindest einer der Funktionen (20, 21, 23 - 26) unabhängig ist.

3. Verfahren nach Anspruch 1 oder 2,
**dadurch gekennzeichnet,**
**dass** bei Auslösung wenigstens einer der Funktionen (20, 21, 23 - 26) der Bremsvorrichtung (3) ein für das Bremsen des Kraftfahrzeugs (1) relevanter Aktor (4) angesteuert und/oder eine Betriebsspannung dieses Aktors (4) erhöht und/oder eine Abhängigkeit eines Bremsvorgangs von der Stellung und/oder Stellungsveränderung eines Bremspedals (31) verändert wird.

4. Verfahren nach einem der vorangehenden Ansprüche,
**dadurch gekennzeichnet,**
**dass** wenigstens eine der Funktionen (20, 21, 23 - 26) bei ihrer Auslösung einen Druck in einem Bremskreis (3) des Kraftfahrzeugs (1) auf einen vorgegebenen Wert und/oder mit einem vorgegebenen zeitlichen Druckgradienten anhebt.

5. Verfahren nach einem der vorangehenden Ansprüche,
**dadurch gekennzeichnet,**
**dass** wenigstens eine der Auslösebedingungen nur dann erfüllt wird oder erfüllbar ist, wenn ein der Funktion (20, 21, 23 - 26) zugeordneter weiterer Zeitgrenzwert durch die voraussichtliche Zeitdauer überschritten wird.

6. Verfahren nach einem der vorangehenden Ansprüchen,
**dadurch gekennzeichnet,**
**dass** durch das oder ein weiteres Fahrerassistenzsystem (8, 9) oder durch Abfrage einer Benutzereingabe eine Haptikinformation ermittelt wird, die angibt, ob eine Nutzung von Funktionen (20, 21, 23 - 26) der Bremsvorrichtung (3), die eine Haptik einer Bremspedalbetätigung beeinflussen können, erfolgen soll, wobei die Erfüllung wenigstens einer der Auslösebedingungen von der Haptikinformation abhängt.

7. Verfahren nach einem der vorangehenden Ansprüche,
**dadurch gekennzeichnet,**
**dass** durch mehrere Prädiktionsmodule (11, 12, 13) eine jeweilige voraussichtliche Zeitdauer bis zu der Geschwindigkeitsreduzierung oder Bremsung prognostiziert wird, wobei bei der Auswertung der Auslösebedingung ausschließlich die niedrigste für eine momentane Fahrsituation prognostizierte voraussichtliche Zeitdauer berücksichtigt wird.

8. Verfahren nach einem der vorangehenden Ansprüche,
**dadurch gekennzeichnet,**
**dass** die Prognose der voraussichtlichen Zeitdauer bis zu der Geschwindigkeitsreduzierung oder der Bremsung durch eine erste Fahrzeugeinrichtung (7) des Kraftfahrzeugs (1), die insbesondere ein Fahrerassistenzsystem (8, 9) implementiert, und die Auswertung der Auslösebedingungen durch eine separat von der ersten Fahrzeugeinrichtung (7) ausgebildete zweite Fahrzeugeinrichtung (19) des Kraftfahrzeugs (1), die insbesondere eine Steuereinrichtung der Bremsvorrichtung (2) ist, erfolgt, wobei die voraussichtliche Zeitdauer bis zu der Geschwindigkeitsreduzierung oder Bremsung über eine Kommunikationsschnittstelle (18) von der ersten an die zweite Fahrzeugeinrichtung (7, 19) bereitgestellt wird.

9. Kraftfahrzeug,
**dadurch gekennzeichnet,**
**dass** es eine Fahrzeugeinrichtung oder zwei separate, über eine Kommunikationsschnittstelle (18) kommunizierende Fahrzeugeinrichtungen (7, 19) umfasst, die oder die gemeinsam zur Durchführung des Verfahrens gemäß einem der vorangehenden Ansprüche eingerichtet ist oder sind.

## Claims

1. Method for operating a motor vehicle (1) with a braking device (2) for braking the motor vehicle (1), comprising the steps:
- Forecasting a probable time duration until a reduction in speed or braking of the motor vehicle (1) triggered by a driver assistance system (8, 9) or by a driver of the motor vehicle (1), depending on the vehicle data concerning the motor vehicle (1) and/or environmental data concerning the motor vehicle environment, and
- Triggering of a respective function (20, 21, 23 - 26) of the braking device (2) when a triggering condition assigned to the respective function (20, 21, 23 - 26) is fulfilled or is only able to be fulfilled when a time limit value assigned to the respective function (20, 21, 23 - 26) is undershot by the probable time duration, wherein at least two of the functions (20, 21, 23 - 26) are assigned time limit values different from one another.

2. Method according to claim 1,
**characterised in that**
the speed of the motor vehicle (1) is independent of a triggering of at least one of the functions (20, 21, 23 - 26).

3. Method according to claim 1 or 2,
**characterised in that**
when at least one of the functions (20, 21, 23 - 26) of the braking device (3) is triggered, an actuator (4) which is relevant for the braking of the motor vehicle (1) is actuated and/or an operating voltage of this actuator (4) is increased and/or a dependency of a braking device on the position and/or the positional change of a brake pedal (31) is changed.

4. Method according to any of the preceding claims,
**characterised in that**
at least one of the functions (20, 21, 23 - 26) raises a pressure in a braking circuit (3) of the motor vehicle (1) to a predetermined value and/or with a predetermined temporal gradient.

5. Method according to any of the preceding claims,
**characterised in that**
at least one of the triggering conditions is fulfilled or fulfillable only when a further time limit value assigned to the function (20, 21, 23 - 26) is overshot by the probable time duration.

6. Method according to any of the preceding claims,
**characterised in that**
by means of the driver assistance system or a further driver assistance system (8, 9) or by requesting a user input, an item of haptic information is determined which specifies whether a use of functions (20, 21, 23 - 26) of the braking device (3) which can influence a haptic of a brake pedal actuation should take place, wherein the fulfilment of at least one of the triggering conditions depends on the item of haptic information.

7. Method according to any of the preceding claims,
**characterised in that**
by means of several prediction modules (11, 12, 13) a respective estimated time duration until the speed reduction or braking is forecast, wherein in the evaluation of the trigger condition only the lowest probable time duration forecast for a current driving situation is taken into consideration.

8. Method according to any of the preceding claims,
**characterised in that**
the forecast of the probable time duration until the speed reduction or the braking is carried out by a first vehicle apparatus (7) of the motor vehicle (1), which implements in particular a driver assistance system (8, 9), and the evaluation of the triggering conditions is carried out by a second vehicle apparatus (19) of the motor vehicle (1) designed to be separate from the first vehicle apparatus (7), which is in particular a control apparatus of the braking device (2), wherein the probable time duration until the speed reduction or braking is provided via a communication interface (18) from the first to the second vehicle apparatus (7, 19).

9. Motor vehicle,
**characterised in that**
it includes a vehicle apparatus or two separate vehicle apparatuses (7, 19) communicating via a communication interface (18), which, or which together, is or are designed to carry out the method according to any of the preceding claims.

## Revendications

1. Procédé de fonctionnement d'un véhicule automobile (1) avec un dispositif de freinage (2) pour le freinage du véhicule automobile (1), comprenant les étapes :
- pronostiquer une durée estimée jusqu'à une réduction de vitesse ou à un freinage déclenché par un système d'assistance au conducteur (8, 9) ou par un conducteur du véhicule automobile (1) du véhicule automobile (1) en fonction de données de véhicule concernant le véhicule automobile (1) et/ou de données d'environnement concernant l'environnement du véhicule automobile, et
- déclencher une fonction respective (20, 21, 23-26) du dispositif de freinage (2) lorsqu'une condition de déclenchement associée à la fonction respective (20, 21, 23-26) est remplie, dans lequel une condition de déclenchement respective est remplie ou peut être remplie seulement lorsqu'une valeur limite de temps associée à la fonction respective (20, 21, 23-26) n'est pas atteinte par la durée estimée, dans lequel différentes valeurs limites de temps l'une de l'autre sont associées à au moins deux des fonctions (20, 21, 23-26).

2. Procédé selon la revendication 1,
**caractérisé en ce**
**que** la vitesse du véhicule automobile (1) est indépendante d'un déclenchement au moins d'une des fonctions (20, 21, 23-26).

3. Procédé selon la revendication 1 ou 2,
**caractérisé en ce**
**que** lors du déclenchement au moins d'une des fonctions (20, 21, 23-26) du dispositif de freinage (3), un actionneur (4) pertinent pour le freinage du véhicule automobile (1) est commandé et/ou une tension de fonctionnement de cet actionneur (4) est augmentée et/ou une dépendance d'un processus de freinage de la position et/ou modification de position d'une pédale de frein (31) est modifiée.

4. Procédé selon l'une quelconque des revendications précédentes,
**caractérisé en ce**
**qu'**au moins une des fonctions (20, 21, 23-26) augmente lors de leur déclenchement une pression dans un circuit de freinage (3) du véhicule automobile (1) à une valeur prédéfinie et/ou avec un gradient de pression temporel prédéfini.

5. Procédé selon l'une quelconque des revendications précédentes,
**caractérisé en ce**
**qu'**au moins une des conditions de déclenchement est remplie ou peut être remplie seulement lorsqu'une autre valeur limite de temps associée à la fonction (20 21, 23-26) est dépassée par la durée estimée.

6. Procédé selon l'une quelconque des revendications précédentes,
**caractérisé en ce**
**qu'**une information d'haptique est déterminée par le ou un autre système d'assistance au conducteur (8, 9) ou par interrogation d'une entrée utilisateur, laquelle indique si une utilisation de fonctions (20, 21, 23-26) du dispositif de freinage (3) qui peuvent influencer une haptique d'un actionnement de pédale de frein, doit être effectuée, dans lequel le remplissage au moins d'une des conditions de déclenchement dépend de l'information d'haptique.

7. Procédé selon l'une quelconque des revendications précédentes,
**caractérisé en ce**
**qu'**une durée estimée respective jusqu'à la réduction de vitesse ou au freinage est pronostiquée par plusieurs modules de prédiction (11, 12, 13), dans lequel exclusivement la durée estimée la plus basse pronostiquée pour une situation de conduite momentanée est prise en compte lors de l'évaluation de la condition de déclenchement.

8. Procédé selon l'une quelconque des revendications précédentes,
**caractérisé en ce**
**que** le pronostic de la durée estimée jusqu'à la réduction de vitesse ou au freinage est effectué par un premier dispositif de véhicule (7) du véhicule automobile (1), qui implémente en particulier un système d'assistance au conducteur (8, 9), et l'évaluation des conditions de déclenchement est effectuée par un second dispositif de véhicule (19) réalisé séparément du premier dispositif de véhicule (7) du véhicule automobile (1) qui est en particulier un appareil de commande du dispositif de freinage (2), dans lequel la durée estimée jusqu'à la réduction de vitesse ou au freinage est fournie par le biais d'une interface de communication (18) du premier au second dispositif de véhicule (7, 19).

9. Véhicule automobile,
**caractérisé en ce**
**qu'**il comporte un dispositif de véhicule ou deux dispositifs de véhicule (7, 19) séparés, communiquant par le biais d'une interface de communication (18) qui est ou qui sont conçus ensemble pour la réalisation du procédé selon l'une quelconque des revendications précédentes.
